# EUROPEAN PATENT APPLICATION

(11) **EP 4 787 042 A1**
(43) Date of publication of application: **05.08.2026**
(21) Application number: 25382054.2
(22) Date of filing: 30.01.2025
(51) Int. Cl.: G02B 7/182, G02B 26/08

(54) **INFLATABLE MIRROR FOR A TELESCOPE**

(71) Applicant: Slimop Space S.L., 08018 Barcelona (ES)
(72) Inventor: Ferrer Puig, Eduardo Juan, 08018 Barcelona (ES); Torres Sabaté, Armengol, 08018 Barcelona (ES); Santillán Iturres, Alejandro Javier, 08018 Barcelona (ES); Royo Royo, Santiago, 08222 Terrassa (ES); Giménez Aragón, Sara, 08222 Terrassa (ES)
(74) Representative: Curell Suñol S.L.P.

(57) **Abstract**

Inflatable mirror (1) for a telescope, comprising a rigid outer rim (2), a first and second membranes (3, 4), and a flexible mirror (5); wherein at least one of said first membrane (3) and said second membrane (4) is transparent; wherein said first membrane (3) and said second membrane (4) are attached to said outer rim (2) thereby defining an internal airtight volume, and wherein said flexible mirror (5) is attached to said outer rim (2) between said first membrane (3) and said second membrane (4), thereby defining a first airtight chamber (6) inside said internal airtight volume between said first membrane (3) and said flexible mirror (5), and a second airtight chamber (7) inside said internal airtight volume between said second membrane (4) and said flexible mirror (5), such that the pressure of the first airtight chamber (6) may be different from the pressure of the second airtight chamber (7).

## Description

### Field of the invention

The invention lies in the field of optical devices, in particular inflatable mirrors for its use in telescopes or other optical applications, and more specifically, for its use in satellite telescopes.

In particular, the invention relates to an Inflatable mirror for a telescope.

The invention also relates to a telescope comprising said inflatable mirror, a process for manufacturing said inflatable mirror, the use of the inflatable mirror in a telescope and in an optical communication system.

### Prior art

Inflatable mirrors (also known as flex-mirrors or membrane-mirrors), for telescopes known in the art are manufactured having an inflatable chamber between one or two membranes and using pneumatic pressure for deformation and mechanical stability. One of the membranes is the mirror itself and it is typically a flexible material with a reflective coat in the face that will receive the light. These inflatable mirrors require shape corrections in the secondary optics of the telescope because they are not perfect conical shapes but only approximate.

The corrective secondary optics is precisely designed for a single shape of the mirror (except in the case of active optics) and, therefore, the optical resolution of the instrument using these mirrors is dependent on the stability of the shape achieved, which in turn depends on the stability of the applied pneumatic pressure with respect to the environment, which also depends on the stability of the temperature of the environment.

A common problem with these mirrors is that they are susceptible to changes in shape due to changes in atmospheric pressure and changes in ambient temperature. When used in optics these mirrors must be compensated for these types of changes with a high accuracy that is very difficult to obtain.

The inflatable mirrors known in the art often have a lower weight than traditional solid concave mirrors, however, they are generally not well suited for space use. The main reason is the differential pressure from the ground of the Earth where the mirror is manufactured, and the environmental pressure is around 1atm, to its travel to orbit or beyond, where the environmental pressure is close to 0atm. This change in the environmental pressure limits the use of small pressures and may even result in possible damage to the membranes. This effect is particularly relevant for long focal lengths that imply a small internal pressure. The deformation of the membrane is given by the difference between the external pressure and the internal pressure of the chamber. It is not desirable that this difference in pressures becomes greater than the deformation rupture strength limit of the membrane at any time, i.e., from manufacturing on Earth to operation in space. Since the mirror is typically a membrane with a reflecting surface that is a metallic deposit, it is also not desirable that the final deformation in operation is less than any deformation it may have from the manufacture of the inflatable mirror on the ground until it is placed in orbit. Therefore, for inflatable mirrors for space use that require long focal lengths, obtaining a pressure close to zero in the internal chamber would imply a large deformation on the ground, which will then turn into a minimal operational deformation, with the consequent deterioration of the reflective layer.

### Summary of the invention

The invention is aimed to provide an inflatable mirror of the type stated at the beginning, being able to avoid the problems that have been identified above.

This purpose is achieved by an inflatable mirror of the type indicated at the beginning, characterized in that it comprises:
- a rigid outer rim;
- a first membrane;
- a second membrane; and
- a flexible mirror;
wherein at least one of said first membrane and said second membrane is transparent;
wherein said first membrane and said second membrane are attached to said outer rim thereby defining an internal airtight volume, and wherein said flexible mirror is attached to said outer rim between said first membrane and said second membrane, thereby defining a first airtight chamber inside said internal airtight volume between said first membrane and said flexible mirror, and a second airtight chamber inside said internal airtight volume between said second membrane and said flexible mirror, such that the pressure of the first airtight chamber may be different from the pressure of the second airtight chamber.

The term "transparent" should be interpreted regarding electromagnetic radiation at the working wavelengths. As a non-limiting example, a mirror aimed for working within the visible and near infrared spectra may be transparent for wavelengths between 400 and 1400 nanometres. Likewise, for infrared applications, it could be 700 to 2500 nanometres.

The mirror of the invention comprises three deformable elements: the first and second membranes and the flexible mirror, all of them are preferably circular. At least one of the first and second membranes, in particular the one separating the mirror from its focus direction, is made of a material that is transparent at the desired wavelength. Said two membranes are preferably identical, in this case, both are transparent at the same wavelength. Said first and second membranes are placed as caps on a rigid outer rim (for example, a robust metal cylinder), thus creating an internal airtight volume. The double chamber is established by separating these two membranes with an intermediate element in between, thereby defining a first and a second airtight chambers. This intermediate element is a flexible mirror, preferably obtained by covering a flexible membrane with a reflective deposit, typically aluminium, gold, silver, etc. The flexible mirror may be made of a different material other than those used in the first and second membranes and does not need to be transparent. However, it may be convenient to allow a hole in the centre for returning light rays needed by some telescopes.

During the manufacture of the mirror, initially the first and second airtight chambers are at the same pressure which is equal to the surrounding environmental pressure. In a preferred embodiment wherein both chambers have the same dimensions, the volume of both chambers is also the same. After the double chamber is assembled, air is removed or added from/to the first airtight chamber, from/to the second airtight chamber, or both. This pressure change will result in a rearrangement of the first and second membranes and the flexible mirror until a new equilibrium is reached, thereby resulting in deformation of the flexible mirror. This deformation can be configured as desired by varying as the new equilibrium pressures in order to modify the curvature to obtain the desired concavity of the flexible mirror. The curvature of the mirror depends on the pressure difference between both chambers. Once the configuration has been chosen, the inflatable mirror will be ready to operate at the chosen environmental pressure. As a non-limiting example, it can be configured inside a vacuum chamber, if the device is chosen to operate in space, or at 1 atm at sea level if it is to operate on Earth. In case of change in the environmental pressure, both chambers will also change approximately the same pressure difference with respect to the environment. Small differences may be expected due to the fact that initially the pressures of both chambers differ and therefore also the deformations of the corresponding membranes differ, which may result in certain non-linearities in their deformation with respect to the applied pressure. In the case wherein the two chambers do not have the exact same dimensions and/or the first and second membranes are not identical, this difference may be compensated by designing different initial volumes of the chambers, the materials and/or by injecting or removing air from the chambers. In the preferred embodiment wherein the two chambers and membranes are equal, the volume/pressure inside both chambers are also similar, therefore, a change in pressure will affect both chambers almost equally, causing the pressure difference to remain almost unchanged. This effect desensitizes the inflatable mirror to small changes in pressure. In case of temperature changes with respect to the initial configuration temperature, the pressure will vary accordingly, but the chamber will also be very insensitive to these changes, as long as both chambers reach the same temperature.

The mirror of the invention uses membranes defining a dual chamber with the flexible mirror between two membranes. Said membranes and mirror are configured to pneumatically deform with two different static pressures, allowing to quickly obtain a concave mirror of desired radius of curvature according to the pressure differential between the two chambers. Thanks to the double chamber, differential pressure compensation can be obtained, which compensates for the change in the shape of the membrane due to external changes in pressure and/or temperature for an inflatable mirror system. This effect results in a device having a high degree of insensitivity to temperature and pressure changes compared to a traditional flex-mirrors that only have one chamber. This pressure compensation may also be used for compensating the change in the shape of the membrane to external changes in pressure and/or temperature for an inflatable mirror system. Further, compared to traditional solid concave mirrors, the mirror of the invention has a very low weight and a high scalability for mass production. This type of inflatable mirror may be used for applications in all types of telescopes, whether terrestrial or satellite and also for optical communications, for example in the visible and/or infrared range.

Contrary to the single chamber inflatable mirrors known in the art, the double-chambered mirror of the invention can be used in space because the maximum deformation in its initial assembly on the ground and in transit to orbit will be of almost the same order as the deformation in space operation.

Preferably, the inflatable telescope comprises at least one further membrane provided in front of one of said first membrane and said second membrane, thereby defining a further airtight chamber between said further membrane and said first or second membrane. The maximum deformation tolerated by the membranes before rupture may be below the pressure difference between the inside and outside of the chambers due to the change in the environmental pressure. The incorporation of further membranes defining further chambers limit the maximum pressure difference that each membrane must withstand. This effect is obtained by adding further membranes on one or both sides of the double chamber, thereby defining further airtight chambers. In this way the double chamber could become a triple, quadruple, sextuple chamber or whatever it may be required to obtain differences between each of the membranes that do not exceed the rupture limits.

Preferably, the inflatable mirror further comprises a first valve opening to said first airtight chamber, and a second valve opening to said second airtight chamber. Said valves facilitate injecting or suctioning air from the chambers as required by operation, either manually or by using control means. Further valves may be envisaged, for example, for attaching measuring means for measuring the pressure inside each airtight chamber.

Preferably, the inflatable mirror further comprises pressure control means configured to modify the internal pressure of said first airtight chamber and said second airtight chamber by injecting or suctioning a gas through said first valve and said second valve. This embodiment allows equalizing or compensating the volumes of each chamber in order to grant precise control of the deformation of the flexible mirror.

Preferably, said first membrane and is identical to said second membrane, thereby having the same behaviour and deformation, thus obtaining a device able to compensate for differences of pressure. Since the membrane facing the reflective side of the flexible mirror must be transparent, in this case both membranes are transparent. Preferably, said first chamber and said second chamber have the same internal volume, thereby improving the effect.

Preferably, said flexible mirror comprises a membrane covered with a reflective material, preferably, aluminium, gold, or silver. The membrane of the flexible mirror is not necessarily transparent, however, a transparent hole in the centre may be preferred according to the telescope type, as has been described above.

Preferably, said outer rim is circular and said first membrane, said second membrane, and said flexible mirror are circular. The circular shape facilitates obtaining the desired curvature of deformation, in particular for the flexible mirror.

Preferably, said outer rim has an internal surface facing said internal airtight volume, said first membrane having a first attaching zone along its perimeter, said second membrane having a second attaching zone along its perimeter, and said flexible mirror having a third attaching zone along its perimeter, said internal surface provided with a first anchoring support arranged for anchoring said first membrane by said first attaching zone, a second anchoring support for anchoring said second membrane by said second attaching zone, and a third anchoring support for anchoring said flexible mirror by said third attaching zone; each of said first anchoring support, each second anchoring support and said third anchoring support circumferentially extending along said internal surface of said outer rim. The internal surface of the outer rim is therefore the side facing the first and second membranes, and the flexible mirror. The supports facilitate the attachment of the membranes to the outer rim.

Preferably, at least one of said first anchoring support, said second anchoring support or said third anchoring support is one of a groove or a step.

Preferably, each of said first anchoring support, said second anchoring support and said third anchoring support is provided with one circumferential gasket, in particular an O-ring, such that the corresponding membrane or flexible mirror is in contact with said corresponding gasket. The gaskets may deform when attaching the membranes and flexible mirror, thereby avoiding damage.

Preferably, each of said first anchoring support, said second anchoring support and said third anchoring support is provided with one further gasket also being circumferential, such that the corresponding membrane or flexible mirror is pressed between the corresponding gasket and further gasket of the corresponding anchoring support. This option further improves the support of each membrane by attaching them with two gaskets, one at each side of the membrane.

Preferably, said first anchoring support and said second anchoring support are perpendicular to said internal surface. The curvature in the first membrane and also in the second membrane may be in contrary directions in different stages during manufacture and operation. Using perpendicular support grants that the membrane is not curved in a direction contrary to the support and minimizes the risk of damaging said membrane.

Preferably, said third anchoring grove is not perpendicular to said internal surface, more preferably having an inclination in the range of 2.8 to 3 degrees. Contrary to the case of the first and second membranes, the flexible mirror may only be curved towards one direction. In this case, the inclined support avoids deformations due to the cantilevered support of the flexible mirror, thereby maximizing the effective usable area and/or minimizing the optical aberrations.

Preferably, said first membrane and said second membrane are made of a material that is transparent at a chosen wavelength, in particular at least one of sapphire, quartz and glass.

Preferably, said mirror has a diameter of 20 cm.

Preferably, said rigid outer rim is made of a lightweight metal, a composite material, or a ceramic, more preferably aluminium oxide, Al₂O₃, 99% wt. A non-limiting example of a preferred lightweight metal is Kovar^{®} because it can be in thermal expansion equilibrium with a glass wafer. Other non-limiting examples of suitable materials are beryllium, carbon fibre, alumina, stainless steel, or an alloy that is thermally compatible with the reflective surface of the flexible mirror.

The invention also refers to a telescope comprising at least one inflatable mirror according to any one of the embodiments described above.

Preferably, said telescope is a space telescope aimed for its use out of the Earth atmosphere.

The invention also refers to a process for manufacturing an inflatable mirror for a telescope that comprises the steps of:
- forming a rigid outer rim;
- attaching a flexible mirror to said outer rim, and sealing it; and
- attaching a first membrane and a second membrane to said outer rim and sealing them to form an internal airtight volume, such that said flexible mirror is attached to said outer rim between said first membrane and said second membrane, thereby defining a first airtight chamber inside said internal airtight volume between said first membrane and said flexible mirror, and a second airtight chamber inside said internal airtight volume between said second membrane and said flexible mirror;
wherein at least one of said first membrane and said second membrane is transparent.

Preferably, the process further comprises the steps of:
- providing at least one first valve that opens to said first airtight chamber; and
- providing at least a second valve opens to said second airtight chamber; and, preferably:
- also providing a further valve in said first and second airtight chambers, aimed for measuring the differential pressure between said firs and second airtight chambers.

Preferably, said process further comprises a step of providing pressure control means configured to modify the internal pressure of said first airtight chamber and said second airtight chamber by injecting or suctioning a gas through said first valve and said second valve.

The invention further refers to the use of the inflatable mirror according to any one of the previous embodiments in a telescope, in particular a terrestrial or space telescope.

The invention further refers to the use of the inflatable mirror according to any one of the previous embodiments in an optical communication system.

The invention also includes other features illustrated in the detailed description of some embodiments of the invention and in the accompanying figures.

### Brief description of the figures

Further advantages and features of the invention will become apparent from the following description, in which, without any limiting character, preferred embodiments of the invention are disclosed, in reference to the accompanying figures:
Fig. 1A to 1C are schematic cross-section representations of an inflatable mirror according to the invention when it is exposed to different environmental pressures.
Fig. 2A and 2B are a schematic cross-section representation of the deformation of a membrane when subjected to a pressure (represented by black downward triangles), depending on the support of said membrane.
Fig. 3A and 3B are schematic cross-section representations of the concept shown in Fig. 2A and 2B, respectively, with a membrane held between two circumferential gaskets (O-rings). The dotted lines show the relationship between the diameter of the membrane and the effective surface that is obtained depending on the type of support.
Fig. 4 is a schematic cross-section representation of a flexible mirror corresponding to an embodiment of the inflatable mirror device of the invention having an anchoring support in the form of an inclined groove and with two circumferential gaskets.
Fig. 5A is a schematic cross-section representation of the inflatable mirror according to one embodiment of the invention. Fig 5B is a detail view of Fig. 5A.
Fig. 6 is a cross-section detail view of an inflatable mirror according to another embodiment of the invention.

### Detailed description of embodiments of the invention

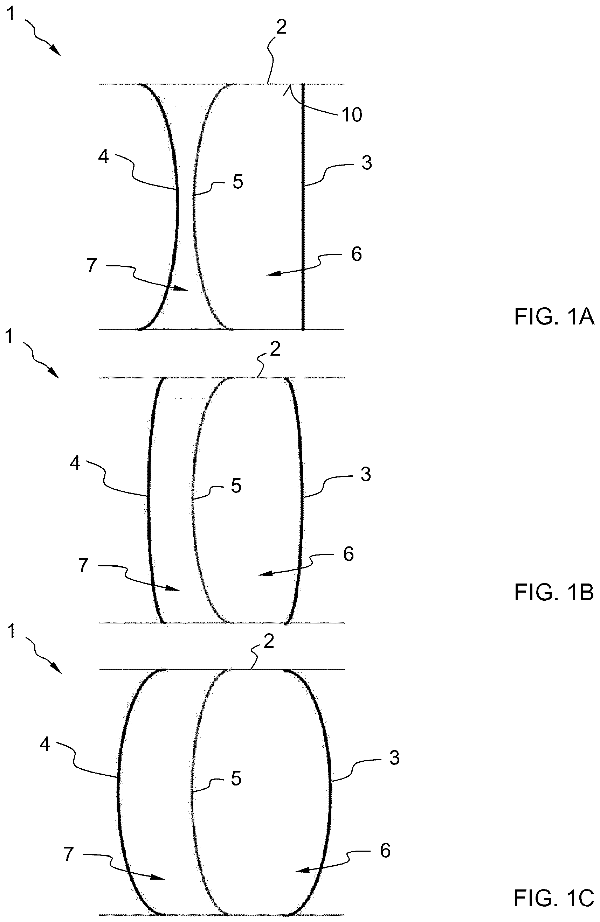

Fig. 1, 4 and 5 show a first exemplary embodiment of the inflatable mirror 1 according to the invention for its use in a telescope. The inflatable mirror 1 comprises a rigid outer rim 2, a first membrane 3, a second membrane 4, and a flexible mirror 5. The outer rim 2 is cylindrical and made of aluminium oxide, Al₂O₃ 99% wt, which is a lightweight material that is compatible with the membranes.
and the first and second membranes 3, 4, as well as the flexible mirror 5 are circular and have a diameter of 20 cm. Other diameters may be envisaged depending on the field of usage of the inflatable mirror 1.

The first and second membranes 3, 4 are identical in terms of materials and dimensions. They are both made of glass, which is a material that is transparent for the light in the visible spectrum. However, in other cases where the inflatable mirror is aimed for different wavelengths, the material may be chosen accordingly. Other non-limiting examples of materials for the membranes 3, 4 are sapphire and quartz. The flexible mirror 5 is also a membrane that has a surface covered with a reflective material, in particular, in the first embodiment the reflective material is aluminium but other materials may be envisaged, for example but not limited to, gold or silver.

The first membrane 3 and the second membrane 4 are attached to said outer rim 2 thereby defining an internal airtight volume. The flexible mirror 5 is also attached to the outer rim 2, in this case between said first membrane 3 and said second membrane 4. Whith this configuration the internal airtight volume is divided by the flexible mirror 5 in a first airtight chamber 6 and a second airtight chamber 7. The first airtight chamber 6 is located between the first membrane 3 and the flexible mirror 5, and the second airtight chamber 7 is located between the second membrane 4 and the flexible mirror 5. Since both chambers are airtight, the pressure of the first airtight chamber 6 may be different from the pressure of the second airtight chamber 7.

The inflatable mirror 1 further comprises a first valve opening to the first airtight chamber 6, and a second valve opening to the second airtight chamber 7. Pressure control means are provided and configured to modify, if necessary, the internal pressure of the first airtight chamber 6 and the second airtight chamber 7 by injecting or suctioning a gas through the corresponding first valve and said second valve. A further valve is also provided for each airtight chamber 6, 7, connected to pressure measuring means that are configured for measuring the pressure inside each airtight chamber 6,7. For the sake of clarity, and with the aim of maintaining the figures as simple as possible, the pressure control means, pressure measuring means, and valves are not shown in the figures.

Fig. 1A to 1C show different status of the inflatable mirror 1 subject to different environmental pressures. Fig. 1A represents the inflatable mirror 1 after its manufacture on Earth surface, and having an external pressure of 1 atm. Fig. 1B shows the deformation of the first membrane 3 and second membrane 4 once the environmental pressure starts to decrease, in the example, 0.5 atm. As it is shown in the figures, the deformation of each membrane 3, 4, complements the other so that the flexible mirror 5 stays within the margin of the desired deformation. Once the mirror is located outside of the Earth atmosphere (i.e., 0 atm of environmental pressure), the deformation of the first and second membranes 3, 4 is even more noticeable, but the resulting differential internal pressures are maintained. The pressure control means are able to compensate for the different pressures of each airtight chamber 6, 7 if necessary.

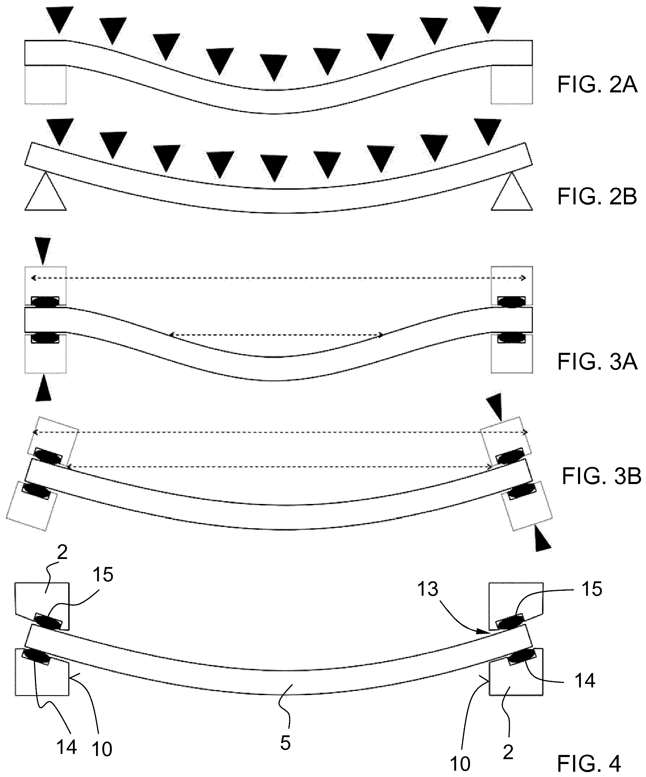

Fig. 2A and 2B represent the deformation of a membrane when subjected to pressure depending on how the membrane is supported. The cantilevered deformation of Fig. 2A is less desirable because the resulting effective area is less than in the case of the narrow support of Fig. 2B. The same concept may be applied when subjecting a membrane between two gaskets as shown in Fig. 3A and 3B. This effect is particularly important in the case of the flexible mirror 5 since it will define the effective usable diameter of the inflatable mirror 1. Fig. 4 shows schematically the way the flexible mirror 3 is attached to the outer rim 2 according to the first embodiment of the invention.

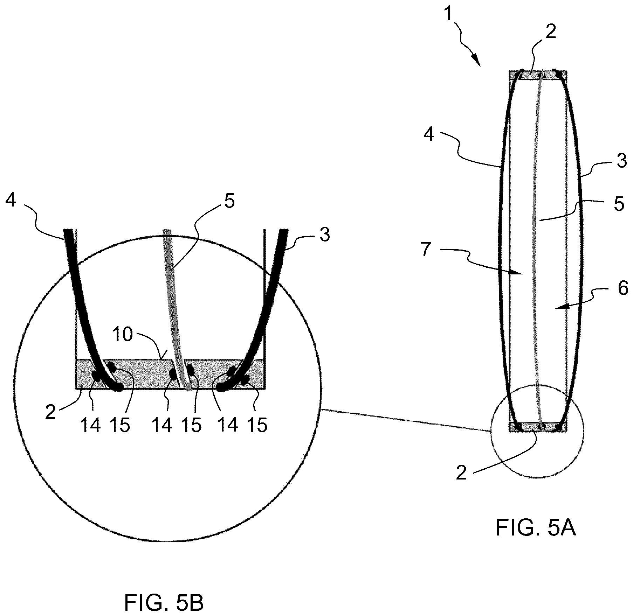

Fig. 5A and 5B show this attachment in more detail. The outer rim 2 has an internal surface 10 facing the internal airtight volume. The first membrane 3 has a first attaching zone along its perimeter that is anchored in a corresponding first anchoring support 11 arranged in the internal surface 10 of the outer rim 2. The same structure is shown for the second membrane 4, having a second attaching zone attached to a second anchoring support 12, and for the flexible mirror 5, having a third attaching zone attached to a third anchoring support 13. In the first embodiment, all the anchoring supports 11, 12, 13 are grooves circumferentially extending along the internal surface 10 of the outer rim 2. As shown in Fig. 5B, each of said first anchoring support 11, said second anchoring support 12 and said third anchoring support 13 is provided with one circumferential gasket 14 and one circumferential further gasket 15, such that the corresponding membrane 3, 4 or flexible mirror 5 is pressed between the corresponding gasket 14 and further gasket 15 in the corresponding anchoring support 11, 12, 13. In the first embodiment, the gaskets 14, 15 are O-rings and the anchoring supports 11, 12, 13 are grooves that are not perpendicular to the internal surface 10 of the outer rim 2. In particular, the third anchoring support 3 has an inclination of around 3 degrees.

Other embodiments of the inflatable mirror 1 according to the invention are disclosed hereinafter. These embodiments share most of the features disclosed in the first embodiment above. Therefore, only the differentiating features will be described in detail.

For the sake of brevity, common features shared with the first embodiment disclosed above will not be described again hereinbelow.

In a second embodiment not shown in the figures, the first and second anchoring supports 11, 12 are grooves that are perpendicular to the internal surface 10 of the outer rim 2.

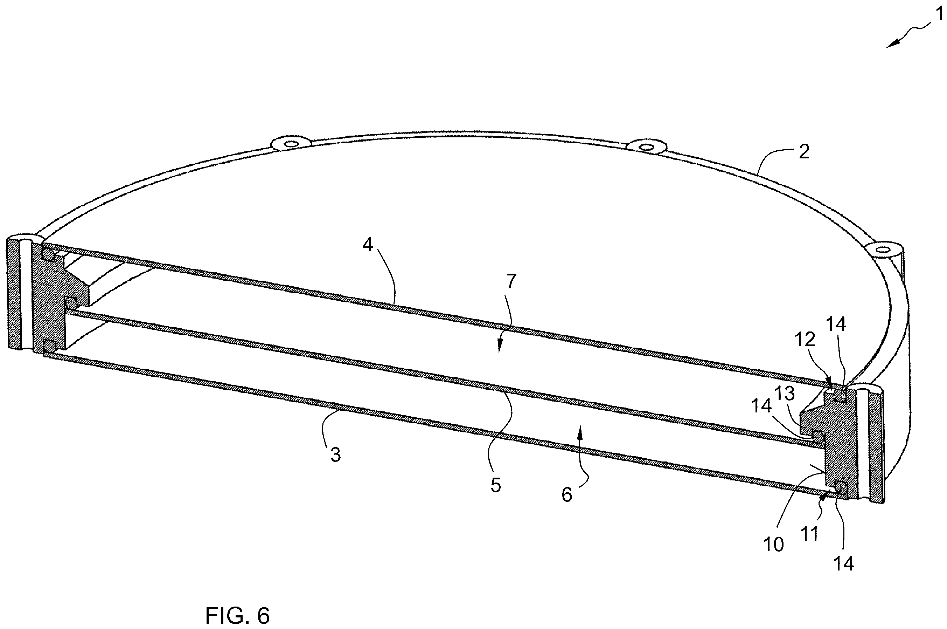

In a third embodiment shown in Fig. 6, the third anchoring support 13 is a step provided with a single gasket 14, such that the flexible mirror is only subjected by said gasket 14 and the pressure of the airtight chambers 6, 7. As shown in the figure, the third anchoring support 13 is a step perpendicular to the internal surface 10 of the outer rim 2. However, the cantilevered deformation is minimized in this case due to the fact that the flexible mirror 5 is only subject to a narrow line of the gasket 14, which is equivalent to Fig. 2A. Two external covers (not shown in Fig. 6) are provided outside of the outer rim 2 and attached thereto by using bolts. The internal surface of said covers is smooth and presses the corresponding first or second membrane 3, 4 to the corresponding gasket in order to create an airtight sealing.

As non-limiting examples of usage, the inflatable mirrors 1 of the aforementioned embodiments can be used for telescopes, in particular, space telescopes or for optical communication systems, either in earth or in space applications.

## Claims

1. Inflatable mirror (1) for a telescope, **characterized in that** it comprises:
- a rigid outer rim (2);
- a first membrane (3);
- a second membrane (4); and
- a flexible mirror (5);
wherein at least one of said first membrane (3) and said second membrane (4) is transparent;
wherein said first membrane (3) and said second membrane (4) are attached to said outer rim (2) thereby defining an internal airtight volume, and wherein said flexible mirror (5) is attached to said outer rim (2) between said first membrane (3) and said second membrane (4), thereby defining a first airtight chamber (6) inside said internal airtight volume between said first membrane (3) and said flexible mirror (5), and a second airtight chamber (7) inside said internal airtight volume between said second membrane (4) and said flexible mirror (5), such that the pressure of the first airtight chamber (6) may be different from the pressure of the second airtight chamber (7).

2. Inflatable mirror (1) according to claim 1, wherein the inflatable mirror (1) further comprises a first valve opening to said first airtight chamber (6), and a second valve opening to said second airtight chamber (7); and preferably, the inflatable mirror (1) further comprises pressure control means configured to modify the internal pressure of said first airtight chamber (6) and said second airtight chamber (7) by injecting or suctioning a gas through said first valve and said second valve.

3. Inflatable mirror (1) according to any one of the claims 1 or 2, wherein said first membrane (3) and is identical to said second membrane (4).

4. Inflatable mirror (1) according to any one of the claims 1 to 3, wherein said outer rim (2) has an internal surface (10) facing said internal airtight volume,
said first membrane (3) having a first attaching zone along its perimeter, said second membrane (4) having a second attaching zone along its perimeter, and said flexible mirror (5) having a third attaching zone along its perimeter,
said internal surface (10) provided with a first anchoring support (11) arranged for anchoring said first membrane (3) by said first attaching zone, a second anchoring support (12) for anchoring said second membrane (4) by said second attaching zone, and a third anchoring support (13) for anchoring said flexible mirror (5) by said third attaching zone;
each of said first anchoring support (11), each second anchoring support (12) and said third anchoring support (13) circumferentially extending along said internal surface (10) of said outer rim (2).

5. Inflatable mirror (1) according to claim 4, wherein at least one of said first anchoring support (11), said second anchoring support (12) or said third anchoring support (13) is one of a groove or a step.

6. Inflatable mirror (1) according to any one of the claims 4 or 5, wherein each of said first anchoring support (11), said second anchoring support (12) and said third anchoring support (13) is provided with one circumferential gasket (14), such that the corresponding membrane (3, 4) or flexible mirror (5) is in contact with said corresponding gasket (14).

7. Inflatable mirror (1) according to claim 6, wherein each of said first anchoring support (11), said second anchoring support (12) and said third anchoring support (13) is provided with one further gasket (15) also being circumferential, such that the corresponding membrane (3, 4) or flexible mirror (5) is pressed between the corresponding gasket (14) and the corresponding further gasket (15) of the corresponding anchoring support (11, 12, 13).

8. Inflatable mirror (1) according to any one of the claims 4 to 7, wherein said first anchoring support (11) and said second anchoring support (12) are perpendicular to said internal surface (10).

9. Inflatable mirror (1) according to any one of the claims 4 to 8, wherein said third anchoring support (13) is not perpendicular to said internal surface (10), preferably having an inclination in the range of 2.8 to 3 degrees.

10. Telescope comprising at least one inflatable mirror (1) according to any one of the claims 1 to 9, preferably said telescope being a space telescope aimed for its use out of the Earth atmosphere.

11. Process for manufacturing an inflatable mirror (1) for a telescope, **characterized in that** the process comprises the steps of:
- forming a rigid outer rim (2);
- attaching a flexible mirror (5) to said outer rim (2), and sealing it; and
- attaching a first membrane (3) and a second membrane (4) to said outer rim (2) and sealing them to form an internal airtight volume, such that said flexible mirror (5) is attached to said outer rim (2) between said first membrane (3) and said second membrane (4), thereby defining a first airtight chamber (6) inside said internal airtight volume between said first membrane (3) and said flexible mirror (5), and a second airtight chamber (7) inside said internal airtight volume between said second membrane (4) and said flexible mirror (5);
wherein at least one of said first membrane (3) and said second membrane (4) is transparent.

12. Process according to claim 11, further comprising the steps of:
- providing a first valve that opens to said first airtight chamber (6); and
- providing a second valve opens to said second airtight chamber (7);
and, preferably, further comprising a step of providing pressure control means configured to modify the internal pressure of said first airtight chamber (6) and said second airtight chamber (7) by injecting or suctioning a gas through said first valve and said second valve.

13. Process according to any one of the claims 11 or 12, wherein said outer rim (2) has an internal surface (10) facing said internal airtight volume,
said first membrane (3) having a first attaching zone along its perimeter, said second membrane (4) having a second attaching zone along its perimeter, and said flexible mirror (5) having a third attaching zone along its perimeter,
said internal surface (10) provided with a first anchoring support (11), preferably a groove or a step, arranged for anchoring said first membrane (3) by said first attaching zone, a second anchoring support (12) for anchoring said second membrane (4) by said second attaching zone, and a third anchoring support (13) for anchoring said flexible mirror (5) by said third attaching zone;
each of said first anchoring support (11), each second anchoring support (12) and said third anchoring support (13) circumferentially extending along said internal surface (10) of said outer rim (2).

14. Use of the inflatable mirror (1) according to any one of the claims 1 to 9 in a telescope.

15. Use of the inflatable mirror (1) according to any one of the claims 1 to 9 in an optical communication system.
